# EUROPÄISCHE PATENTSCHRIFT

(11) **EP 0 544 099 B1**
(45) Veröffentlichungstag und Bekanntmachung des Hinweises auf die Patenterteilung: **22.11.1995**
(21) Anmeldenummer: 92117963.6
(22) Anmeldetag: 21.10.1992
(51) Int. Cl.: B65D 75/14, B65D 85/57

(54) **Faltbehälter zur Aufnahme von Disketten**
Pliable container for computer diskettes
Conteneur pliable pour disquettes

(30) Priorität: 23.11.1991 DE 4138571
(43) Veröffentlichungstag der Anmeldung: 02.06.1993
(73) Patentinhaber: Klöckner-Moeller GmbH, 53115 Bonn (DE)
(72) Erfinder: Pluta, Barbara, W-5300 Bonn 1 (DE)

(56) Entgegenhaltungen:
- EP-A- 0 021 380
- US-A- 3 549 225

## Beschreibung

Die Erfindung bezieht sich auf einen Faltbehälter zur Aufnahme von Disketten, der durch Falten eines Zuschnittes, insbesondere aus Pappe, herstellbar ist.

Faltbehälter und Faltschachteln aus Pappe gibt es in vielfältigen Variationen, wobei für den dauerhaften Gebrauch zum Erhalt der Formstabilität entweder Einstecklaschen oder zusätzliche Verbindungsmittel wie Kleber oder Klebestreifen vorgesehen sind.

Der Erfindung liegt die Aufgabe zugrunde, einen Faltbehälter zur Aufnahme von Disketten zu schaffen, der umweltfreundlich durch Falten und möglichst ohne zusätzliche Klebemittel herstellbar ist und der darüber hinaus bei gleicher Grundform zum Ablegen oder Abheften in einem Ordner zur Aufnahme von Disketten für 5.1/4 Zoll bzw. 3.1/2 Zoll gestaltbar ist.

Diese Aufgabe wird durch einen Faltbehälter mit den Merkmalen des Patentanspruches 1 gelöst. Die Erfindung ermöglicht, einen Faltbehälter aus einem einzigen im wesentlichen etwa rechteckigen Zuschnitt mit Deckblatt, Rückwand und Vorderwand und einer eingeschlagenen Innentasche allein durch annähernd leporelloartiges Falten mit zueinander parallelen Faltkanten herzustellen. Die innere Tasche wird hierbei lediglich durch Aufstecken einer Steckhülse in vom Innenboden der Tasche ausgehende Einsteckschlitze, die die seitlichen Begrenzungen bilden, ausgebildet. Kleberänder oder Einsteckränder, um seitliche Begrenzungen der die Disketten aufnehmenden Tasche zu bilden, sind damit nicht mehr erforderlich. Die durch Falten und Stecken herstellbaren Faltbehälter können je nach der gewünschten Größe und Anzahl der aufzunehmenden Disketten eine entsprechende Größe einer aufzunehmenden Tasche für ein oder mehrere Disketten aufweisen bzw. auch zwei nebeneinander angeordnete separate Taschen, in die jeweils eine oder mehrere Disketten einsteckbar sind. Auf diese Weise ist es möglich, mit dem erfindungsgemäßen Faltbehälter, ausgehend von einem Grundzuschnitt, diesen durch Variation praktisch nur der Breite des äußeren und inneren Bodens und Deckelstreifens für unterschiedliche Anzahlen von Disketten zu variieren. Der Faltbehälter kann dann jeweils, unabhängig von der Anzahl der Disketten, die er aufnimmt, bei gleichem Grundriß, d.h. Breite und Höhe, in normierten Ordnern abgelegt werden.

Vorteilhafte Weiterbildungen der Erfindung sind den kennzeichnenden Merkmalen der Unteransprüche entnehmbar.

Das Entnehmen der Disketten aus dem Faltbehälter wird beispielsweise dadurch erleichtert, daß die Rückwand der inneren Tasche über die Vorderkante, die die Vorderwände der inneren und äußeren Tasche verbindet, vorsteht.

Der Innenboden der inneren Tasche ist nur geringfügig schmaler ausgebildet als der Boden der äußeren Tasche, im wesentlichen nur verringert um die Wanddicken der Tascheninnenwände.

Die Verschlußklappe des Faltbehälters kann entweder lose auf die Vorderwand aufgelegt werden oder aber mittels einer vorstehenden Einstecklasche in einen Einsteckschlitz auf der Vorderwand der äußeren Tasche eingesteckt werden. Zur Kenntlichmachung des Inhaltes des Faltbehälters kann eine Ausnehmung in die Verschlußklappe gestanzt sein, so daß die eingelegte Diskette bzw. die Beschriftung der Diskette sichtbar ist.

Um das Abheften und Ablegen des Faltbehälters in einem Ordner zu erleichtern, ist bevorzugt die Rückwand über den Deckelstreifen hinausgehend um einen über eine Faltkante umschlagbaren Heftrandstreifen vergrößert, der mit einer entsprechenden Lochung versehen werden kann. Diese doppelte Heftrandstreifen kann zur Erhöhung der Stabilität durch Kleben oder mittels Klammern gegen Aufklappen gesichert sein.

Bevorzugt weist die Steckhülle eine geringere Höhe als die Höhe der inneren Tasche auf, jedoch eine der anteiligen Länge der Einsteckschlitze in den jeweiligen Innenwänden der inneren Tasche entsprechende Länge. Für kleinere Disketten kann die innere Tasche in zwei nebeneinanderliegende Aufnahmekammern zum Aufnehmen der Disketten dadurch unterteilt werden, daß beispielsweise drei oder vier Einsteckschlitze parallel zueinander vorgesehen sind, wobei zwei Steckhüllen nebeneinander in die Einsteckschlitze aufschiebbar sind und damit die innere Tasche entsprechend unterteilen.

Die Erfindung wird in der Zeichnung an einem Ausführungsbeispiel erläutert. Es zeigen
- Figur 1: Aufsicht auf einen Zuschnitt für einen Faltbehälter
- Figur 2a,b: Vorderansicht und Aufsicht auf eine Steckhülle für den Zuschnitt nach Figur 1
- Figur 3: Aufsicht auf den aus dem Zuschnitt nach Figur 1 zusammengefalteten Faltbehälter
- Figur 4: Seitenansicht schematisiert auf den Faltbehälter nach Figur 3
- Figur 5: perspektivische Darstellung des Herstellen des Faltbehälters aus dem Zuschnitt und der Steckhülle nach Figur 1, 2a,b
- Figur 6: Teilansicht der Figur 5 mit auf den Zuschnitt aufgesteckter Steckhülle
- Figur 7: perspektivische Ansicht des Faltbehälters in halbgeöffnetem Zustand nach Figur 3 und 4
- Figur 8: Aufsicht auf einen Zuschnitt für einen Faltbehälter mit zwei Steckhüllen für die Aufnahme nebeneinanderliegender Disketten
- Figur 9: Teilausschnitt eines Zuschnittes für einen Faltbehälter für die Aufnahme von zwei nebeneinanderliegenden Disketten als Variation zu Figur 8.

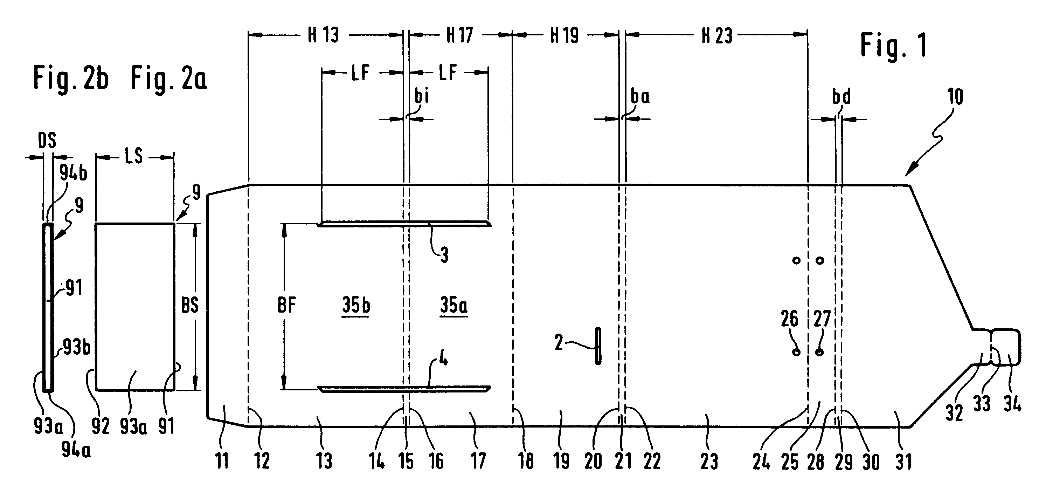

In der Figur 1 ist der Zuschnitt 10 aus Pappe für einen Faltbehälter zur Aufnahme von Disketten dargestellt. Der Zuschnitt 10 ist durch zueinander parallele Faltkanten 12, 14, 16, 18, 20, 22, 24, 28, 30, 33 unterteilt und kann entsprechend leporelloartig zusammengefaltet werden. Der Faltbehälter ist so konzipiert, daß er eine innere Tasche bildet, die mehrere nebeneinanderliegende Aufnahmeräume für Disketten abteilbar ist und von einer äußeren Tasche, die dann verschließbar ist, umhüllt wird. Bei dem dargestellten Ausführungsbeispiel weist der Zuschnitt 10 nach Figur 1 für die Bildung der inneren Tasche die an den Innenboden 15 über Faltkanten 14, 16 angrenzende Innenrückwand 13 und Innenvorderwand 17 auf. Die Innenrückwand 13 kann des weiteren über die Faltkante 12 mit einem inneren Einschlagrand 11 ausgestattet sein. Die äußere Tasche wird von der an die Innenwand 17 über die Faltkante 18 angrenzenden äußeren Vorderwand 19, den sich über die Faltkante 20 anschließenden Boden 21, die sich hieran über die Faltkante 22 anschließende äußere Rückwand 23 gebildet, an die sich entweder über eine Faltkante 28 unmittelbar der Deckelstreifen 29 mit Faltkante 30 und Verschlußklappe 31 anschließt oder aber über eine zwischengeschaltete Faltkante 24 vor dem Deckelstreifen 29 noch ein Heftrandstreifen 25 mit entsprechenden Heftlöchern 27, die spiegelbildlich zur Faltkante 24 ausgebildeten Heftlöchern 26 in der Rückwand 23 zugeordnet sind. Die Verschlußklappe 31 kann des weiteren an ihrem vorderen Rand in beliebiger Formgestaltung mit einer Einstecklasche 32 ausgebildet sein, die gegebenenfalls über eine Faltkante 33 mit einem Verstärkungsteil 34 ausgebildet ist, das nach innen umgeschlagen wird. Zum Ausbilden von auch zu den Seiten des labelloartig zusammenfaltbaren Zuschnittes 10 hin begrenzten Aufnahmeräumen für die Disketten sind die Innenwände 13, 17 der Innentasche mit über den Innenboden 15 der Innentasche durchgehenden zueinander parallelen Einsteckschlitzen 3, 4, die quer, d.h. bevorzugt senkrecht zu den Faltkanten verlaufen, ausgerüstet. Die Einsteckschlitze haben einen Abstand BF voneinander, der das Einstecken einer entsprechenden Diskette zuläßt. Die Höhe H19 der Vorderwand 19 der äußeren Tasche ist etwas größer, ca. 1 mm, wie die Höhe H17 der anderen Vorderwand 17 der inneren Tasche ausgebildet. Die Höhe H13 der Innenrückwand 13 ist bevorzugt höher als die Vorderwände 17 bzw. 19 gewählt und die äußere Rückwand 23 weist bevorzugt eine um einen Heftrandstreifen vergrößerte Höhe H23 als die Höhe H13 der Innenrückwand 13 auf. Die Einsteckschlitze 3, 4 sind symmetrisch zum Innenboden 15 ausgebildet und reichen bevorzugt nur über einen Teil der Höhe H17 bzw. H13 der Innenvorderwand bzw. Innenrückwand. Die anteilige Länge LF der Einsteckschlitze 3 bzw. 4 in der jeweiligen Innenvorder- bzw. Rückwand ist ausreichend, um eine entsprechende Tiefe des Aufnahmeraumes für die Diskette für ein sicheres Behältnis zu gewährleisten.

In der Außenvorderwand 19 ist des weiteren an zugeordneter Stelle der Einsteckschlitz 2 für die Einstecklasche 32 der Verschlußklappe 31 vorgesehen.

In den Figuren 2a,b ist die Steckhülle 9 dargestellt, die praktisch als Hohlprofil mit schmalem rechteckigem Querschnitt ausgebildet ist mit Vorderwand 93a, Rückwand 93b, Seitenwänden 94a, 94b und einer oberen Öffnung 92 und unteren Öffnung 91. Die Breite BS der Steckhülle 9 ist etwas größer als dem Abstand BF der Einsteckschlitze 3,4 des Zuschnittes 10 voneinander entspricht, die Höhe LS der Steckhülle entspricht der anteiligen Länge LF der Einsteckschlitze 3,4 in der jeweiligen Innenrück- bzw. Vorderwand 13, 17.

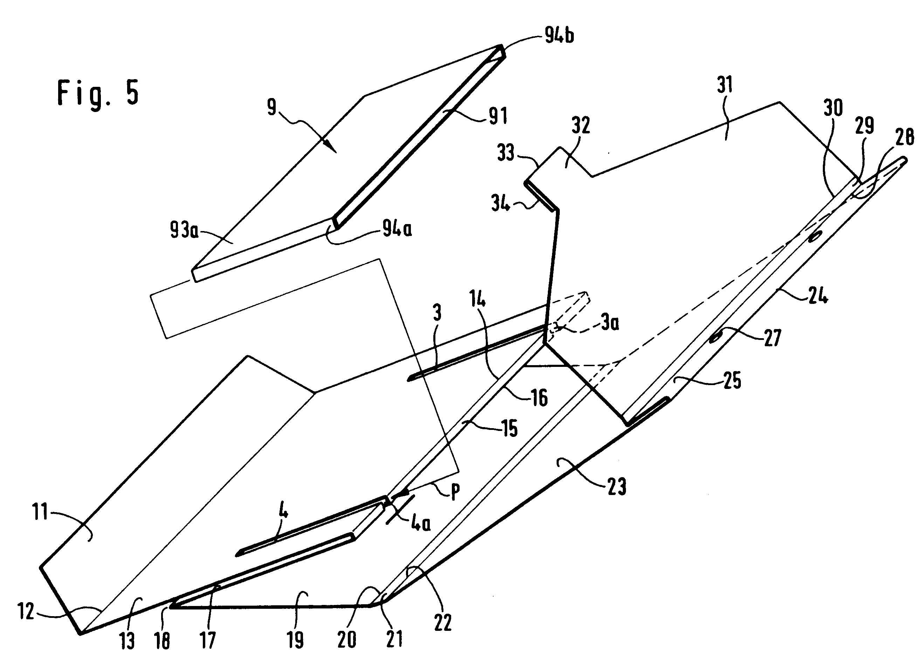

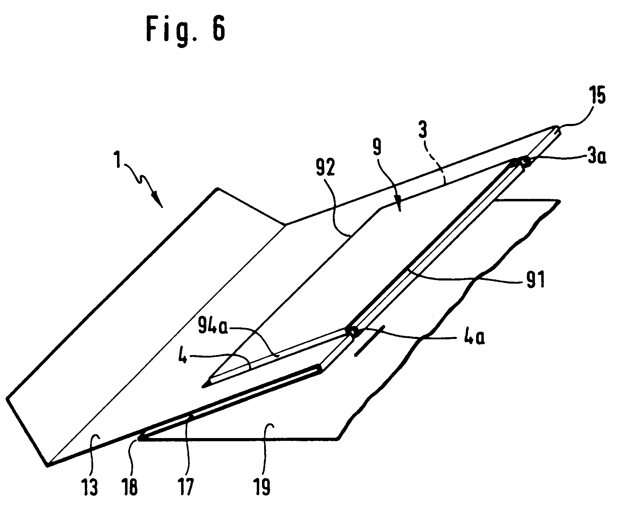

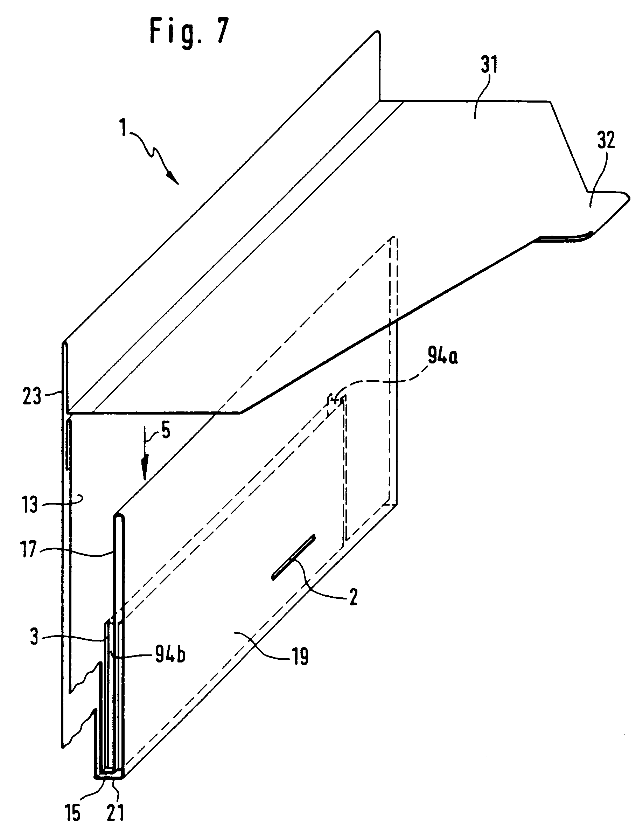

In der Figur 5 ist das Zusammenfalten des Zuschnittes 10 nach Figur 1 perspektivisch dargestellt. Die Breite ba des äußeren Bodens 21 der äußeren Tasche und die Breite bd des Deckelstreifens 29 sind gleich, während die Breite bi des Innenbodens 15 für die innere Tasche etwas schmaler gewählt ist, so daß beim Zusammenfalten der Innenboden 15 auf dem Boden 21 aufsitzt und von der äußeren Tasche ohne Ausbauchung umgeben wird. Beim Umfalten der inneren Tasche um den Innenboden 15, d.h. um die Faltkanten 14, 16 bilden die Einsteckschlitze 3, 4 im Bereich des Innenbodens 15 die Einführöffnungen 3a, 4a für die Steckhülle 9. Wie aus der Teilansicht nach Figur 6 ersichtlich, wird die Steckhülle 9 in die Einsteckschlitze 3, 4 eingeführt und umfaßt dabei die zwischen den Einsteckschlitzen 3, 4 verbleibenden Wandungsteile 35a, 35b der inneren Tasche, siehe Figur 1, und bildet dadurch zwischen der Innenrückwand 13 und Innenvorderwand 17 den seitlich durch die Seitenwände 94a, 94b der Steckhülle 9 begrenzten Aufnahmeraum 5 in der inneren Tasche für eine Diskette, siehe Figur 7.

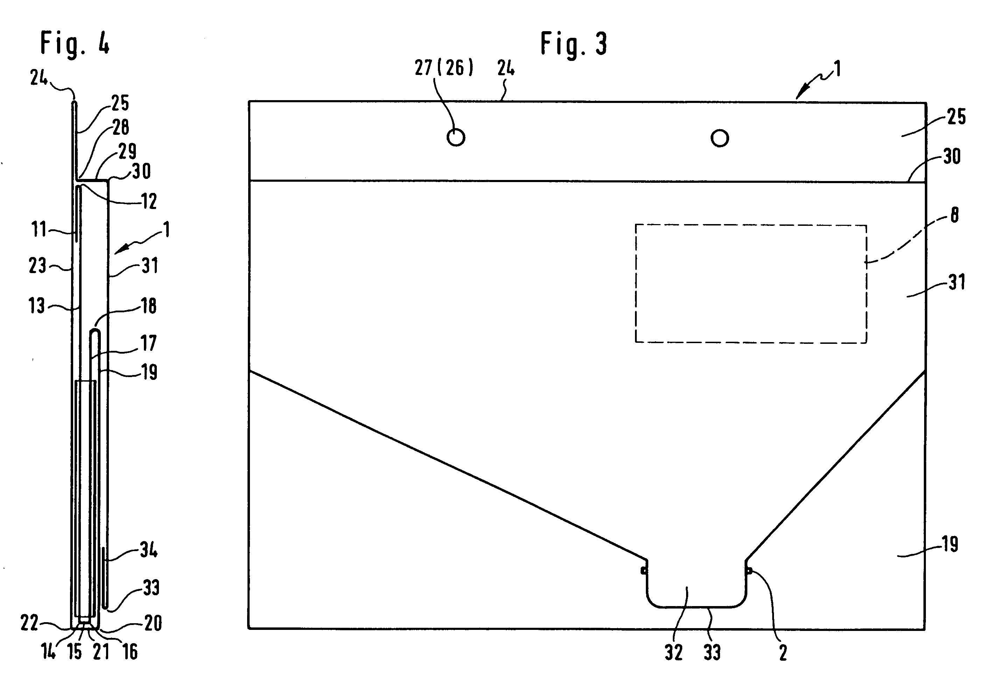

Die äußere Tasche wird nach Figur 5 durch Ausbilden des Bodens 21 durch Umfalten der Rückwand 23 über die Faltkante 22 und des weiteren durch Umschlagen des Heftrandes 25 über die Faltkante 24 und Ausbilden des Deckelstreifens 29 über die Faltkanten 28, 30 hergestellt, siehe auch Figur 7. In der Figur 3 ist dann die Vorderansicht des aus dem Zuschnitt nach Figur 1 zusammen mit der Steckhülle nach Figur 2a,b zusammengefalteten und gesteckten Faltbehälters 1 dargestellt. An dem Heftrandstreifen 25 mit den Heftlöchern 27, 26 kann der Faltbehälter 1 dann in einem Ordner abgelegt werden. In der Figur 4 ist schematisch die Seitenansicht des Faltbehälters 1 nach Figur 3 ersichtlich und die Lage der einzelnen Faltkanten und Teile des Zuschnittes 10 nach Figur 1 einschließlich Steckhülle 9. Die Breite DS der Steckhülle 9, siehe Figur 2b, richtet sich nach der Anzahl der einzusteckenden Disketten bzw. ihrer Dicke. Wenn nur eine Diskette eingesteckt werden soll, dann entspricht DS etwa der Dicke einer Diskette, bei drei aufzunehmenden Disketten dem Dreifachen.

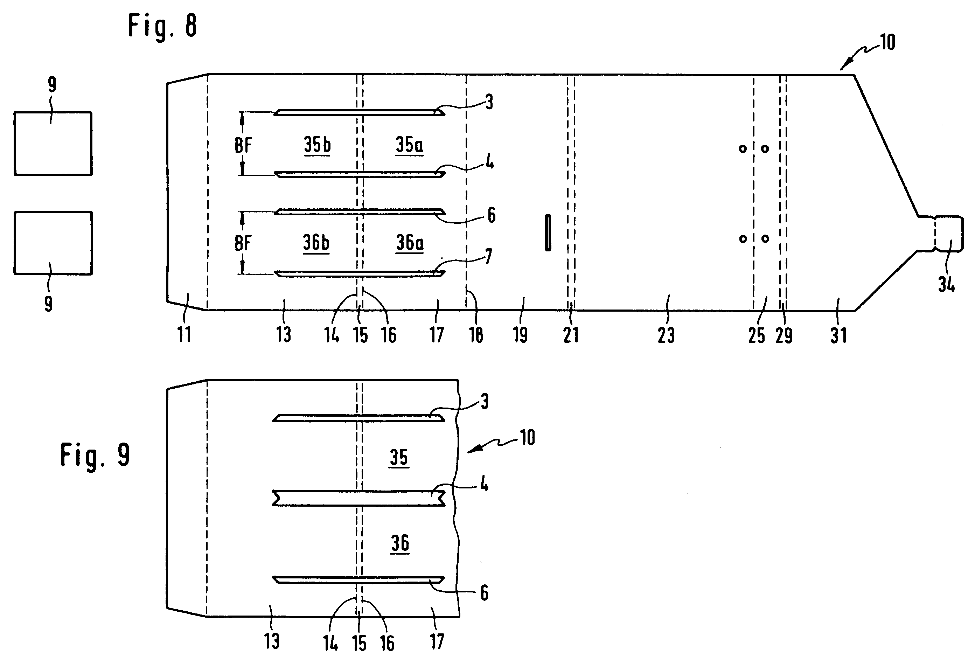

Für den Fall, daß beispielsweise bei kleineren Disketten zwei nebeneinander angeordnet werden sollen oder eine größere, d.h. breitere, und eine kleinere schmale Diskette nebeneinander untergebracht werden sollen, kann der Zuschnitt 10, siehe Figur 8, mit beispielsweise 4 Einsteckschlitzen 3,4, 6,7 im Bereich der Innenrückwand 13 und Innenvorderwand 17 durchlaufend über den Innenboden 15 ausgebildet sein, die jeweils paarweise einander zugeordnet sind und dann einen entsprechend der Größe der Diskette ausreichenden Abstand BF, gleich oder verschieden, voneinander aufweisen. Entsprechend diesem Abstand BF werden dann Wandteile 35a,b und 36a,b zwischen diesen Einsteckschlitzen eingeschlossen, die mittels Steckhüllen 9 entsprechender Größen zu zwei Aufnahmeräumen für die Disketten in der inneren Tasche abgeteilt werden. Es ist auch möglich, wie in der Figur 9 dargestellt, mit nur drei Einsteckschlitzen 3,4, 6, die über die innere Tasche vom Innenboden 15 her ausgehend vorgesehen sind, zwei Steckhüllen 9 aufzuschieben, um zwei Aufnahmeräume in der inneren Tasche auszubilden, wobei der mittlere Einsteckschlitz für das Einschieben der Seitenwände der aneinandergrenzenden Steckhüllen 9 dient.

Für den Fall, daß der Inhalt des Faltbehälters ohne Herausnahme sichtbar sein soll, kann in die Verschlußklappe 31, siehe Figur 3, eine Ausnehmung 8 gestanzt sein, durch die beispielsweise die Beschriftung einer in den Faltbehälter in die innere Tasche eingelegten Diskette sichtbar ist.

## Patentansprüche

1. Faltbehälter zur Aufnahme von Disketten, herstellbar durch Falten eines Zuschnittes der mittels zueinander paralleler Faltkanten in Aufeinanderfolge unterteilt ist in eine Verschlußkappe (31), Deckelstreifen (29), eine äußere Tasche mit Außenrückwand (23), äußerem Boden (21) und Außenvorderwand (19) und einer inneren in die äußere Tasche einschlagbaren Tasche mit einer Innenvorderwand (17), Innenboden (15) und Innenrückwand (13), wobei quer zu den Faltkanten mindestens zwei Einsteckschlitze (3,4,6,7) durchlaufend im Bereich der inneren Tasche von der Innenrückwand (13) über den Innenboden (15) in die Innenvorderwand (17) mit einem mindestens einer Breite einer Diskette entsprechenden Abstand voneinander ausgebildet sind und eine oben und unten offene Steckhülle (9) vorgesehen ist, die mit ihren seitlichen Wandungen (94a,94b) im zusammengefalteten Zustand des Zuschnittes (10), bei dem die Innenrückwand (13) und Innenvorderwand (17) im Abstand des Innenbodens (15) parallel nebeneinander angeordnet sind, in die Einsteckschlitze (3,4,6,7) vom Innenboden (15) her einschiebbar ist und mit ihren seitlichen Wandungen (94a,b) die seitliche Begrenzung der die Diskette aufnehmenden inneren Tasche (5) bildet.

2. Faltbehälter nach Anspruch 1,
**dadurch gekennzeichnet**, daß die Innenrückwand (13) über die Vorderkante (18) der Vorderwände (17,19) der inneren und äußeren Tasche vorsteht.

3. Faltbehälter nach Anspruch 1 oder 2,
**dadurch gekennzeichnet**, daß der Deckelstreifen (29) und der äußere Boden (21) eine der aufsummierten Dicke der einzusteckenden Disketten entsprechende Breite (bd, ba) aufweisen und die Breite (bi) des Innenbodens (15) nur geringfügig kleiner als die des äußeren Taschenbodens (21) gewählt ist.

4. Faltbehälter nach einem der Ansprüche 1 bis 3,
**dadurch gekennzeichnet**, daß die Verschlußkappe (31) eine vorstehende Einstecklasche (32), die gegebenenfalls mittels eines über eine Faltkante (33) umschlagbaren Verstärkungsteiles (34) verstärkbar ist, aufweist, die in einen Einsteckschlitz (2) auf der Außenvorderwand (19) einsteckbar ist.

5. Faltbehälter nach einem der Ansprüche 1 bis 4,
**dadurch gekennzeichnet**, daß die äußere Rückwand (23) über den Deckelstreifen (29) hinausgehend um einen über eine Faltkante (24) umschlagbaren Heftrandstreifen (25) mit Heftlöchern (26, 27) vergrößert ist.

6. Faltbehälter nach einem der Ansprüche 1 bis 5,
**dadurch gekennzeichnet**, daß die Höhe (LS) der Steckhüllen (9) gleich oder kleiner wie die anteilige Länge (LF) der Einsteckschlitze (3,4,6,7) in den Innenwänden (13, 17) der inneren Tasche gewählt ist.

7. Faltbehälter nach einem der Ansprüche 1 bis 6,
**dadurch gekennzeichnet**, daß zwei nebeneinander in Einsteckschlitze (3,4,6,7) der Innenwände der inneren Tasche einschiebbare Steckhüllen (9) zum Ausbilden von seitlichen Begrenzungen für zwei nebeneinander angeordnete Aufnahmeräume in der inneren Tasche vorgesehen sind.

8. Faltbehälter nach einem der Ansprüche 1 bis 7,
**dadurch gekennzeichnet**, daß er aus Pappe hergestellt ist.

## Claims

1. Folding container allowing the reception of diskettes, fabricable by the folding of a blank which is divided by a series of folding edges parallel with regard to one another, while the folding creates a closing cap (31), cover strips (29), an external pocket, including an external rear wall (23), an external bottom (21), and an external front wall (19), an internal pocket, which can be folded into the external pocket, and which includes an internal front wall (17), an internal bottom (15), and an internal rear wall (13), while at least two insertion slots (3, 4, 6, 7) are arranged in a continuous way in the area of the internal pocket, extending from the internal rear wall (13), via the internal bottom (15), and into the internal front wall (17) at a distance with regard to one another corresponding at least to the width of one diskette, and while an insertion jacket (9) is provided, which is open at the top and at the bottom, and which can be inserted from the internal bottom (15) into the insertion slots (3, 4, 6, 7) with the help of its lateral walls (94a, 94b) in the folded condition of the blank (10), in which condition the internal rear wall (13) and the internal front wall (17) are arranged in parallel side by side with regard to one another and at the distance of the internal bottom (15), and in which the lateral walls (94a, 94b) form the lateral delimitation of the internal pocket (5) which receives the diskette.

2. Folding container as claimed in claim 1,
**wherein** the internal rear wall (13) projects beyond the front-side edge (18) of the front walls (17, 19) of the internal and external pocket.

3. Folding container as claimed in claim 1 or 2,
**wherein** the cover strip (29) and the external bottom (21) present a width (bd, ba) which corresponds to the total width of the diskettes to be inserted, and wherein the selected width (bi) of the internal bottom (15) is only slightly smaller than the width of the external pocket bottom (21).

4. Folding container as claimed in any claim 1 through 3, **wherein** the closing cap (31) presents a projecting insertion tongue (32) which can be reinforced by means of a reinforcement element (34), that can be folded around a folding edge (33), and which insertion tongue (32) can be inserted into an insertion slot (2) at the external front wall (19).

5. Folding container as claimed in any claim 1 through 4, **wherein** the external rear wall (23) is enlarged beyond the cover strip (29) by means of a binding margin (25) which presents binding holes (26, 27) and which can be folded around a folding edge (24).

6. Folding container as claimed in any claim 1 through 5, **wherein** the height (LS) of the insertion jackets (9) has been selected at a value which is equal to or smaller than the proportional length (LF) of the insertion slots (3, 4, 6, 7) in the internal walls (13, 17) of the internal pocket.

7. Folding container as claimed in any claim 1 through 6, **wherein** two insertion jackets (9) are provided and can be inserted side by side into insertion slots (3, 4, 6, 7) of the internal walls of the internal pocket in order to form the lateral limits for two reception spaces arranged side by side in the internal pocket.

8. Folding container as claimed in any claim 1 through 7, **wherein** this folding container is made of paperboard.

## Revendications

1. Récipient pliable pour le logement de disquettes, réalisable par plage d'une découpe qui au moyen de rebords pliables est répartie parallèlement l'une sur l'autre à la suite, en une couverture de fermeture (31), une bande de couvercle (29), une poche extérieure avec une paroi extérieure arrière (23), un fond extérieur (21) et une paroi extérieure avant (19) et une poche intérieure logeable dans la poche extérieure avec une paroi intérieure avant (17), un fond intérieur (15) et une paroi intérieure arrière (13), au sein du quel de manière transversale par rapport aux rebords de plis, au moins deux nervures de logement (3,4,6,7) sont représentées passant en continu dans le secteur de la poche intérieure de la paroi intérieure arrière (13), par le fond intérieur (15) à la paroi intérieure avant (17) avec une largeur entre elles représentant au minimum celle correspondant à une disquette et il est prévu une enveloppe emboîtable (9) ouverte vers le haut et vers le bas qui avec ses parois latérales (94a,94b) en position repliée de découpe (10) lors duquel la paroi intérieure arrière (13) et la paroi intérieur avant (17) sont ordonnées de maniére parallèles l'une à côté de l'autre, avec l'écart du fond intérieur (15), est glissable dans les nervures de logement (3,4,6,7) depuis le fond intérieur (15) et avec ses parois latérales (94a,94b)forme la limite latérale de la poche intérieure recueillant les disquettes (5).

2. Le récipient pliable d'après la revendication 1,
est **caractérisé en cela que** la paroi intérieure arrière (13) se trouve au devant du rebord avant (18) des parois avant (17,19) des poches intérieures et extérieures.

3. Le récipient pliable d'après les revendications 1 ou 2 **caractérisé en cela que** la bande de couvercle (29) et le fond extérieur (21) constituent l'une des épaisseurs additionnées de la largeur correspondante (bd,ba) à celle des disquettes à loger et la largeur (bi) du fond intérieur (15) est formée seulement de trés peu, plus petit que le fond extérieur de la poche (21).

4. Le récipient pliable d'après les revendications 1 à 3, est **caractérisé en cela que** la couverture de fermeture (31) est constituée d'une languette à encastrer (32) située sur l'avant, qui en cas de besoin est renforçable au moyen d'un rebord pliable (33) de la partie de renfort à rabattre (34) qui est à loger dans la nervure de logement (2) sur la paroi extérieure avant.

5. Le récipient pliable d'après les revendications 1 à 4, est **caractérisé en cela que** la paroi extérieure arrière (23) allant au dela de la bande de couvercle (29) est agrandie par une bande de largeur de marge (25) avec des trous de brochure (26,27) par un rebord pliable (24).

6. Le récipient pliable d'après les revendications 1 à 5, est **caractérisé en cela que** la hauteur (LS) de l'enveloppe emboîtable (9) est constituée de manière égale ou plus petite que la longueur proportionnelle (LF) des nervures de logement (3,4,6,7) dans les parois intérieures (13,17) de la poche intérieure.

7. Le récipient pliable d'après les revendications 1 à 6, est **caractérisé en cela que** deux enveloppes emboîtables intercalaires (9) l'une à côté de l'autre dans les nervures de logement (3,4,6,7) des parois intérieures (13,17) de la poche intérieure soient prévues pour la formation de limites sur les côtés de deux compartiments de réception rangés l'un à côté de l'autre dans la poche intérieure.

8. Le récipient pliable d'après les revendications 1 à 7, est **caractérisé en cela qu'il** fabriqué en carton.
